# EUROPEAN PATENT SPECIFICATION

(11) **EP 0 424 822 B1**
(45) Date of publication and mention of the grant of the patent: **15.02.1995**
(21) Application number: 90120115.2
(22) Date of filing: 19.10.1990
(51) Int. Cl.: B27B 5/06

(54) **Panel cutting machine**
Plattensägemaschine
Scie mécanique pour panneau

(30) Priority: 26.10.1989 IT 367289
(43) Date of publication of application: 02.05.1991
(73) Proprietor: SELCO S.r.L., I-40056 Crespellano (IT)
(72) Inventor: Tagliaferri, Renzo, I-29100 Piacenza (IT)
(74) Representative: Jorio, Paolo

(56) References cited:
- AT-B- 362 129
- DE-A- 3 034 205
- DE-A- 3 110 860
- DE-A- 3 300 351
- DE-A- 3 716 666
- DE-U- 8 236 595
- FR-A- 2 122 123

## Description

The present invention relates to a machine for cutting panels of wood, fibreboard, plastic or similar material. Known cutting machines substantially comprise two cutting stations, one for cutting along a first axis and the other along a second axis perpendicular to the first; a panel conveyor belt; a first pusher for pushing a series of packed cut strips from the first cutting station to a pickup point on the conveyor; and a second pusher for pushing said series of packed strips from a limit stop on the conveyor to the second cutting station.

A major drawback of known cutting machines of the aforementioned type is that the transportation system between the two cutting stations fails to provide for firm packing of the cut strips. In the case of thin, narrow strips in particular, these may be shifted out of line as they are pushed towards the second cutting station, with all the disadvantages this entails as regards second cut.

It is also known from the document DE-A-3 034 205 a panel cutting machine comprising a pair of mutually perpendicular cutting stations, and a pair of corresponding pushers to feed the packs to be cut by the cutting stations. The minor packs so cut are temporarily received by a first portion of a work surface provided between the two cutting stations, and are then transferred by a horizontally and vertically movable slide to a second portion of the work surface, for being finally pushed towards the second cutting station.

For aligning the minor packs before being pushed by the second pusher, a pair of rows of retractable pins are provided, one row being carried by the work surface and the other row being carried by the slide. The alignment of these minor packs is caused by moving back the slide, thus pushing the packs by means of said other row of pins towards the first row, whereby the slide is responsible for both moving and aligning the minor packs. In addition, in this known machine no provision is made for parking in different zones the minor packs of strips having different width, nor for properly receiving the pieces cut from the minor packs.

The aim of the present invention is to provide a panel cutting machine designed to overcome the above drawbacks, i.e. which features a system for parking a pack differing in size from other packs and a transportation system designed to ensure the packed strips are kept perfectly aligned.

Further aims and advantages of the present invention are revealed in the following description.

With this aim in view, according to the present invention, there is provided a machine for cutting panels of wood, fibreboard, plastic or similar material, comprising:
a first work surface having a longitudinal axis and adapted to be fed with a pack of panels;
a first cutting station at one end of said first work surface having a first cutting direction perpendicular to said longitudinal axis;
a first pusher for pushing in stages said pack of panels at each operating cycle along said first work surface towards said first cutting station for cutting packs of strips on said first cutting direction;
a second work surface having a longitudinal axis aligned with that of said work surface, said second work surface including a first portion close to said first cutting station to receive said packs of strips so cut, and a second portion adjacent to said first portion and opposite to said first work surface;
a slide horizontally movable along the longitudinal axis of said second work surface and also movable up and down along a vertical axis;
first and second drive means for horizontally moving and respectively for moving up and down said slide as to pick up said packs of strips at said first portion and to transfer them to said second portion;
a second cutting station located close to said second portion having a second cutting direction perpendicular to said first cutting direction;
a first row of aligning elements for aligning said packs of strips on said second portion perpendicularly to said second cutting direction;
a second row of aligning elements movable along the longitudinal axis of said second work surface to push said packs of strips towards said first row of aligning elements; and a second pusher for pushing said packs of strips so aligned at each operating cycle from said second portion towards said second cutting station for cutting pieces from said pack of strips on said second cutting direction;
characterised by the fact
that said second cutting station is provided at one end of a third work surface having its longitudinal axis perpendicular to that of said second work surface to receive said pieces so cut;
that said first pusher and said first cutting station are controlled for cutting from said pack of panels a plurality of first packs of strips having a predetermined width, and at least one second pack of strips having a different width; that said second work surface also comprises a third portion close to said second portion and opposite to said first portion for temporarily holding said different width pack of strips;
that said first and second drive means are controlled as to cause said slide firstly to transfer said different width pack of strips from said first portion to said third portion to be temporarily held, and then to transfer a number of said second packs of strips having different width from said third portion to said second portion for being cut by said second cutting station; and
that an electronic control system is provided for controlling the operating machine cycle.

A preferred, non-limiting embodiment of the present invention is described by way of example with reference to the accompanying drawings, in which:
Fig. 1 shows a partial schematic view of a panel cutting machine in accordance with the present invention;
Fig. 2 shows a partially sectioned side view of part of Fig. 1 machine;
Figs. 3 to 8 show various stages in a specific operating cycle of the Fig. 1 machine.

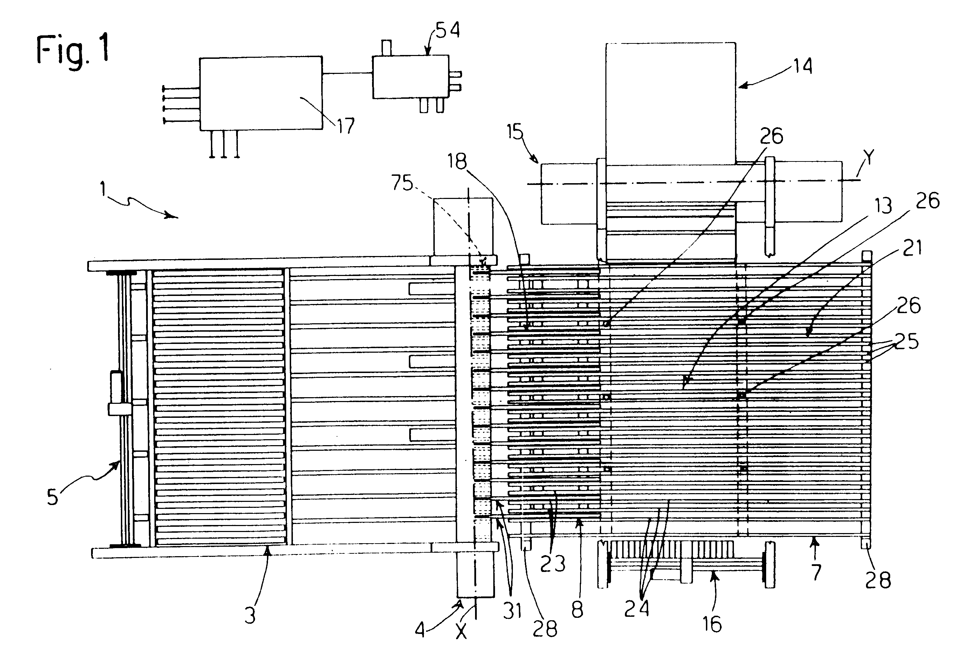

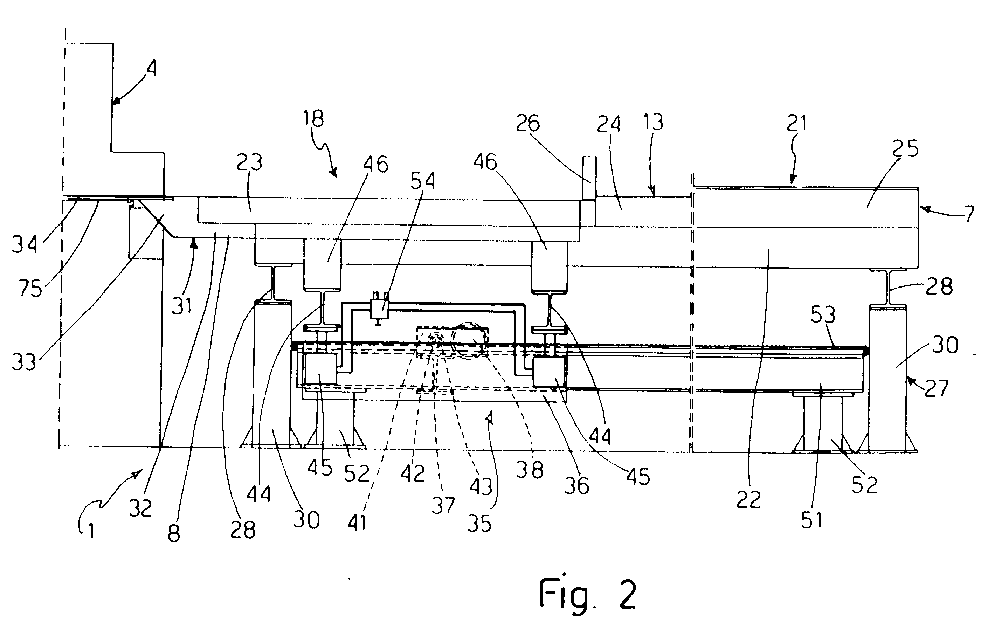

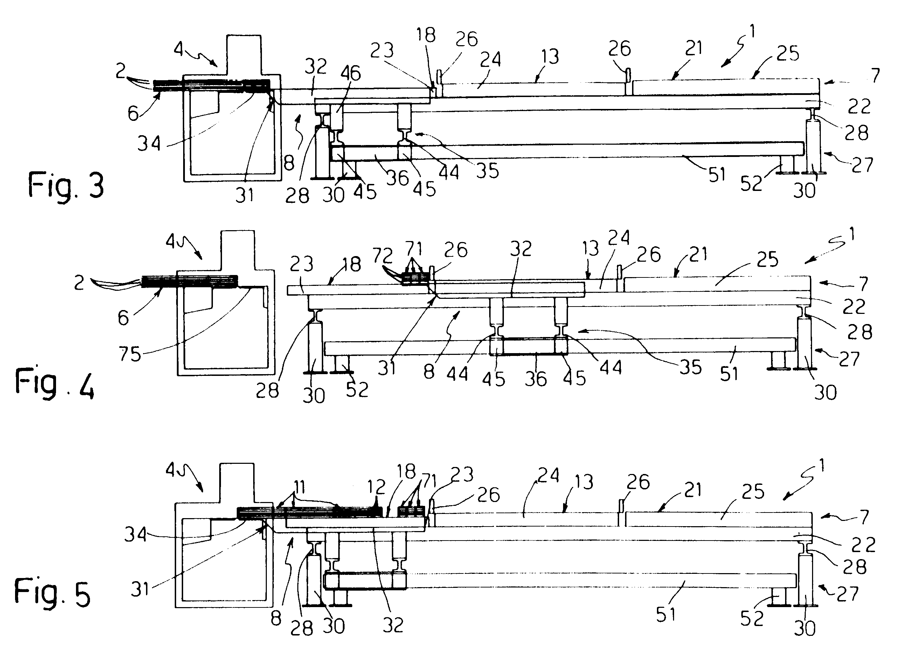

Number 1 in Figs. 1, 2 e and 3 indicates a machine for cutting panels 2 of wood, fibreboard, plastic or similar material. Machine 1 comprises:
a first work surface 3 fed in known manner with a pack 6 of panels 2;
a first cutting station 4 at one end of work surface 3;
a first pusher 5 designed, at each operating cycle of machine 1, to push pack 6 along work surface 3 towards cutting station 4;
a second work surface 7 aligned with work surface 3;
a slide 8 designed to travel along work surface 7;
designed, at cutting station 4, to pick up a pack 11 (Fig. 5) of strips 12 produced by cutting pack 6 along the X axis in station 4; and designed to transfer pack 11 towards portion 13 of work surface 7;
a third work surface 14 having its longitudinal axis perpendicular to that of work surface 7, and one end close to said portion 13;
a second cutting station 15 located at said end of work surface 14 and designed to cut pieces from pack 11 along the Y axis perpendicular to said X axis;
a second pusher 16 designed, at each operating cycle, to push a series of packs 11 from portion 13 towards cutting station 15;
first drive means for moving slide 8 along the longitudinal axis of work surface 7;
second drive means for moving slide 8 along a vertical axis in relation to work surface 7; and
an electronic control system 17 for controlling operation of machine 1.

Cutting stations 4 and 15, pushers 5 and 16, and the design of work surfaces 3 and 14 are known and will therefore only be described briefly. In particular, cutting stations 4 and 15 comprise cutting members supported on a carriage driven by a motor along the cutting axis X, Y and normally moved by hydraulic actuators along a vertical axis. Each cutting member presents a circular blade powered by a respective motor. Pushers 5 and 16 substantially comprise a bar driven by a motor back and forth parallel to its longitudinal axis. Each bar is fitted with a number of equally spaced elements designed to contact and move packs 6 or 11.

Along its longitudinal axis, work surface 7 defines substantially three in-line work portions. The first portion, numbered 18, is the portion of surface 7 closest to cutting station 4, and presents its upper surface substantially on a level with the upper surface of work surface 3. The second portion, numbered 13, is located adjacent to portion 18 opposite to the work surface 3, and presents its upper surface higher than that of portion 18 and substantially on a level with that of work surface 14 provided in correspondence with the cutting station 15. The third portion, numbered 21 and referred to for reasons described later on as the hold portion, is located adjacent to portion 13 opposite to the first portion 18, and presents its upper surface higher than that of portion 13.

Work surface 7 comprises a number of equally spaced, prismatic, bottom bars 22 parallel to one another and to the longitudinal axis of work surface 7, and arranged horizontally with their largest faces upright. At portion 18, bars 22 are fitted with respective bars 23 similar to, arranged in the same way as, but shorter than bars 22. In particular, bars 23 project frontwards towards station 4, beyond the respective ends of bars 22, so as to define, with their upper faces and axial ends, the upper surface and axial confines of portion 18 respectively. At portion 13, bars 22 are fitted with respective bars 24 similar to, and arranged in the same way as, bars 23, and the upper faces and axial ends of which define the upper surface and axial confines of portion 13 respectively. For enabling smooth transfer of packs 11 to second cutting station 15, the upper surface of each bar 24 presents a number of rollers having a horizontal rotation axis perpendicular to the longitudinal axis of work surface 7. At portion 21, bars 22 are fitted with respective bars 25 similar to, and arranged in the same way as, bars 23 and 24, and the upper faces and axial ends of which define the upper surface and axial confines of portion 21 respectively.

As shown in the accompanying drawings, between bars 23 and 24, and between bars 24 and 25, a space is defined in which operates a respective known aligning device. Said device comprises a number of vertical pins 26 aligned along a pair of straight horizontal lines or rows perpendicular to the longitudinal axis of work surface 7, and designed to slide axially by virtue of known drive means, usually pneumatic, controlled by control system 17. The first row of pins 26 between bars 23 and 24 acts as a square for station 15, by virtue of being aligned with the lateral edge of work surface 14 as shown in Fig.1. Pins 26 in the second row defined between bars 24 and 25 are also designed to move along the longitudinal axis of work surface 7 irrespective from the slide 8, for pushing packs 11, at a given stage of the cycle, towards the first row of pins 26 and so aligning the same. It should be noted that, with pins 26 positioned normally, as shown in the accompanying drawings, the bottom ends of all the pins 26 on both devices are substantially flush with the upper surface of portion 13.

As shown in Fig. 2, work surface 7 comprises a bed 27 having two parallel horizontal beams 28 perpendicular to the longitudinal axis of work surface 7. Each beam 28 supports one end of bars 22 on top, and is supported at the bottom on a vertical foot 30.

As shown in Fig.2, slide 8 comprises a number of equally spaced bars 31 parallel to one another and to the longitudinal axis of work surface 7, and arranged horizontally with their largest faces upright.

As shown in Fig.1, each bar 31 is located between two bars 22 to enable it to slide both horizontally and vertically. Pins 26 are installed in the gaps between bars 22 not engaged by a respective bar 31. The two rows of pins 26 may of course be offset in relation to each other.

Each bar 31 comprises a substantial portion 32 of constant vertical thickness; a small central portion 33 decreasing in vertical thickness towards station 4; and a small end portion 34 of constant vertical thickness but considerably less than that of portion 32. Said three portions 32, 33 and 34 naturally differ in thickness at the bottom, the upper surfaces being flush. Slide 8 comprises a carriage 35 designed to travel along the longitudinal axis of work surface 7 and having:
two parallel couplings 36 located beneath and parallel to the longitudinal axis of work surface 7;
a number of horizontal beams 37 for transversely connecting couplings 36 (for the sake of simplicity, only one connecting the center lines of couplings 36 is shown by the dotted line in Fig.2);
an electric motor 38 (shown by the dotted line) supported on one of beams 37 and controlled by the control system 17;
a reduction member 41 (shown by the dotted line) also supported on a beam 37, connected to motor 38, and having an output shaft 42 fitted with a gear 43;
a further two horizontal beams 44 parallel to and higher than beams 37, driven by couplings 36, and designed to move vertically parallel with each other;
two hydraulic actuators 45 supported by couplings 36 for each beam 44, the end of the vertical piston rod of each actuator 45 being secured to an end of the respective beam 44; and a number of parallel, equally spaced spacer plates 46 parallel to the longitudinal axis of work surface 7, arranged with their larger faces and longitudinal axes upright, supported at the bottom on respective beam 44, and supporting a respective bar 31 on top.

As shown in Fig.2, two parallel slideways 51 are installed beneath and parallel to the longitudinal axis of work surface 7, and supported at each end on feet 52.

Each slideway 51 guides a respective coupling 36 by means of a known, e.g. roller, system. Carriage 35 is moved along slideways 51 by gear 43 meshing with a fixed chain 53 extending in a straight line parallel to the longitudinal axis of work surface 7 and secured at the ends to respective fixed bodies. Actuators 45 are operated by control system 17 via a known hydraulic circuit 54 shown schematically in Fig.s 1 and 2.

The operating cycle of machine 1 comprises:
a first stage wherein work surface 3 is fed with a pack 6;
a second stage wherein device 5 feeds pack 6 towards station 4 so that a small portion of pack 6 is arranged along the cutting line;
a third stage wherein station 4 trims off said small portion of pack 6;
a fourth stage wherein device 5 feeds pack 6 forward until a portion of predetermined length is positioned along the cutting line of station 4, and wherein the front portion (portions 34 of bars 31) of slide 8 is sufficiently clear of the cutting line to enable the trimmings to drop down;
a fifth stage wherein slide 8, with its upper surface slightly lower than work surface 3, moves towards station 4 so as to bring its front portion close to the cutting line and slightly (2 mm) lower than a comb portion 75 of station 4 supporting pack 11 during the cutting process;
a sixth stage wherein station 4 cuts pack 11 resting on portion 75;
a seventh stage wherein device 5 moves by the same amount as in the fourth stage, while at the same time backing the first pack 11 along slide 8, and so on until the last pack 11 is cut;
an eighth stage wherein pins 26 in said first row are moved down below the level of the upper surface of portion 13; slide 8 moves up beyond the upper surface of portion 13 and towards portion 13 itself; and, as pins 26 move back up, slide 8 at portion 13 moves down below the upper surface of portion 13 for depositing packs 11 on the same;
a ninth stage wherein, as slide 8 moves back beneath portion 13 to station 4 for reloading, said second row of pins 26 moves towards the first row for aligning packs 11 along the square in station 15, and, upon return of said second row of pins 26, device 16 (in the same way as device 5 in stages four and seven) provides for feeding packs 11 forward in stages, at each of which packs 11 are cut in station 15.

In the eighth stage, slide 8 could move up much higher in relation to the upper surface of portion 13, thus enabling downward withdrawal of said first row of pins 26 to be dispensed with. Such a cycle affords three major advantages: 1) packs 11 are transferred to portion 13 without having to slide along work surface 7; 2) the last pack 11 is picked up directly from station 4, thus enabling mechanical removing means to be dispensed with; 3) during withdrawal of packs 11 from station 4, slide 8 is located below the upper surface of portion 13, thus enabling withdrawal from station 4 and cutting in station 15 to be performed simultaneously, the advantage of which is primarily economic. Upon completion of the cutting stage in station 15, if pack 11 has already or just been withdrawn, slide 8 may thus provide for feeding further packs 11 towards portion 13.

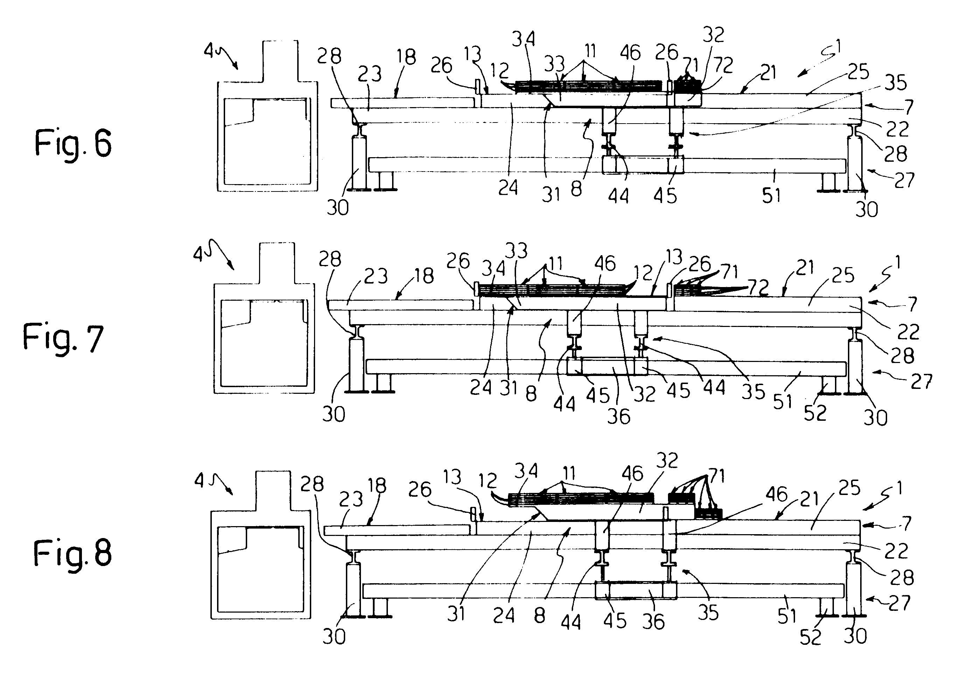

Figs.3 to 8 show the operating cycle of machine 1 should part of the material cut in station 15 need to be temporarily or permanently excluded. This cycle is particularly useful when packs 71 of a different (in the example shown, smaller) width from that of packs 11 are cut in station 4, e.g. as when the total width of panels 2 is such as to produce leftover material when cut into strips 12. Said leftover material may of course be used for forming strips 72 of which packs 71 are composed. With reference to Figs.3 to 8, said cycle comprises:
a first stage wherein pack 6 is fed on to work surface 3;
a second stage wherein pack 6 is fed along work surface 3 and trimmed;
a third stage wherein station 4 cuts pack 6, for example, into three packs 71 (Fig.3) which, in the same way as already described, are accumulated on slide 8 which is of course located close to the cutting line and slightly lower than work surface 3;
a fourth stage wherein slide 8 moves up halfway between portions 18 and 13, then travels towards portion 13 for feeding packs 71 to the rear of portion 18 (Fig.4), where it then moves down for unloading packs 71;
a fifth stage wherein slide 8 moves back beneath portion 18 to station 4, and pack 6 is normally cut,
as already described, into packs 11, which are accumulated (Fig.5) on slide 8 at a suitable distance from packs 71;
a sixth stage wherein slide 8 moves up over the top end of pins 26, travels towards portion 21 so as to feed packs 71 to portion 21 and packs 11 to portion 13, then moves down halfway between portions 13 and 21 so as to unload packs 71 in portion 21 (Fig.6);
a seventh stage wherein, at the same level as in the sixth stage, slide 8 moves back to station 4 so that packs 11 (Fig.7) retained by the first row of pins 26 are left in station 13;
an eighth stage wherein, as described previously, packs 11 are aligned and cut in stages while further packs 71 are being picked up by slide 8.

As the second series of packs 71 is picked up in the sixth stage, slide 8 backs the first series up along portion 21 (Fig.8) to make room for unloading the second series. When a sufficient number of packs 71 has been unloaded in portion 21, slide 8 moves down, towards, and up past portion 21 to pick up packs 71, which it then carries back and unloads in portion 13. After being aligned, packs 71 are then cut in stages in station 15.

The advantages of the present invention will be clear from the foregoing description.

In particular, machine 1 provides for conveying packs of material between two cutting stations in such a manner as to avoid any sliding contact and, therefore, misalignment of the same. This is achieved by means of highly original system featuring a shuttle (slide 8) which may be operated both vertically and horizontally as required. Moreover, the substantially comb-shaped design of work surface 7, and the fact that it is divided into three portions at different levels, afford considerable freedom of movements of slide 8 for unloading and picking up even only part of the material at any point along surface 7. A further point to note is that said material handling system and the design of surface 7 are both cheap and easy to produce. finally, as already from station 4 and cutting in station 15, thus reducing operating time and increasing the output of machine 1.

## Claims

1. A machine for cutting panels of wood, fibreboard, plastic or similar material, comprising:
a first work surface (3) having a longitudinal axis and adapted to be fed with a pack (6) of panels (2);
a first cutting station at one end of said first work surface (3) having a first cutting direction (X) perpendicular to said longitudinal axis;
a first pusher (5) for pushing in stages said pack (6) of panels (2) at each operating cycle along said first work surface (3) towards said first cutting station (4) for cutting packs (11, 71) of strips (12, 72) on said first cutting direction (X);
a second work surface (7) having a longitudinal axis aligned with that of said work surface (3), said second work surface (7) including a first portion (18) close to said first cutting station (4) to receive said packs (11, 71) of strips (12, 72) so cut, and a second portion (13) adjacent to said first portion (18) and opposite to said first work surface (3);
a slide (8) horizontally movable along the longitudinal axis of said second work surface (7) and also movable up and down along a vertical axis;
first and second drive means (38 and 45) for horizontally moving and respectively for moving up and down said slide (8) as to pick up said packs (11, 71) of strips (12, 72) at said first portion (18) and to transfer them to said second portion (13);
a second cutting station (15) located close to said second portion (13) having a second cutting direction (Y) perpendicular to said first cutting direction (X);
a first row of aligning elements (26) for aligning said packs (11, 71) of strips (12, 72) on said second portion (13) perpendicularly to said second cutting direction (Y); a second row of aligning elements (26) movable along the longitudinal axis of said second work surface (7) to push said packs (11, 71) of strips (12, 72) towards said first row of aligning elements (26); and
a second pusher (16) for pushing said packs (11, 71) of strips (12, 72) so aligned at each operating cycle from said second portion (13) towards said second cutting station (15) for cutting pieces from said pack (11, 71) of strips (12, 72) on said second cutting direction (X);
characterised by the fact
that said second cutting station (15) is provided at one end of a third work surface (14) having its longitudinal axis perpendicular to that of said second work surface (7) to receive said pieces so cut;
that said first pusher (5) and said first cutting station (4) are controlled for cutting from said pack (6) of panels (2) a plurality of first packs (11) of strips (12) having a predetermined width, and at least one second pack (71) of strips (72) having a different width;
that said second work surface (7) also comprises a third portion (21) close to said second portion (13) and opposite to said first portion (18) for temporarily holding said different width pack (71) of strips (72);
that said first and second drive means (38, 45) are controlled as to cause said slide (8) firstly to transfer said different width pack (71) of strips (72) from said first portion (18) to said third portion (21) to be temporarily held, and then to transfer a number of said second packs (71) of strips (72) having different width from said third portion (21) to said second portion (13) for being cut by said second cutting station (15); and
that an electronic control system (17) is provided for controlling the operating machine cycle.

2. A machine as claimed in Claim 1, characterised by the fact that the aligning elements of said two rows are formed of pins (26) axially movable up and down to the upper surface of said second portions, said slide (8) being movable upwards above said portions (18, 13, 21), said first of said row of pins (26) being located between said first portion (18) and said second portion (13), said second row of pins (26) being normally located between said second portion (13) and said third portion (21).

3. A machine as claimed in Claim 1, characterised by the fact that the aligning elements (26) of at least one row of said two rows are vertically stationary, said slide (8) being movable upward above said aligning elements (26), said first row of aligning elements (26) being located between said first portion (18) and said second portion (13), said second row of aligning elements (26) being located between said second portion (13) and said third portion (21).

4. A machine as claimed in any preceding Claim, characterised by the fact that the upper surface of second portion (13) is at a higher level than the upper surface of said first portion (18) and at a lower lever than the upper surface of said third portion (21), said slide (8) being moved to a level intermediate the upper surface of two mutually adjacent of said portions (18, 13, 21) to move some of said packs (11, 71) of strips (12, 72) in a lower one of said two adjacent portions (18, 13) while some other of said packs (11, 71) of strips (12, 72) contact the upper one of said two adjacent portions (13, 21).

5. A machine as claimed in Claim 4, characterised by the fact that said slide (8) and said first cutting station (4) are controlled for cutting, from a pack of panels (2), said plurality of first packs (11) of strips (12) and a group of second packs (71) of strips (72) having a minor width, said slide (8) being further controlled to preliminary transfer said group of second packs (71) so cut to a zone of said first portion (18) remote from said first cutting station (4), and, when said plurality of packs (11) has been cut, to simultaneously transfer said plurality of first packs (11) to said second portion (13) and said group of second packs (71) to said third portion (21).

6. A machine as claimed in Claim 5, characterised by the fact that said slide (8) is controlled to transfer to said third portion (21) a further group of said second packs (71) to said third portion (21) by backing the previously transferred groups of said second packs (71) as to make room for unloading said further group of packs (71), said slide (8) being then controlled to simultaneously transfer a number of groups of said second packs (71) from said third portion (21) to said second portion (13).

7. A machine as claimed in any Claim from 4 to 6, characterised by the fact that said second work surface (7) is substantially comb-shaped and comprises a number of first substantially prismatic bars (22) parallel to the longitudinal axis of said second work surface (7), and arranged with their largest faces upright; said bars (22) defining on top a first flat surface forming said upper surface of said first portion (18), a second flat surface forming said upper surface of said second portion (13) and a third flat surface forming said upper surface of said third portion (21).

8. A machine as claimed in Claim 7, characterised by the fact that said slide (8) is comb-shaped and comprises a number of second substantially prismatic bars (31) parallel to the longitudinal axis of said second work surface.

9. A machine as claimed in Claim 8, characterised by the fact that it comprises a carriage (35) having:
two parallel couplings (36) located beneath and parallel to the longitudinal axis of said second work surface (7);
first horizontal beams (37) for transversely connecting said couplings (36);
said first drive means (38) for controlling axial travel of said couplings (36) along respective slideways (51); two second horizontal beams (44) parallel to and higher than said first beams (37), driven by said couplings (36), and designed to travel vertically parallel to each other;
said second drive means (45) for controlling vertical travel of said second beams (44); and
a number of parallel spacer plates (46) parallel to the second longitudinal of said second work surface (7); arranged with their longitudinal axes and larger faces upright, supported at the bottom on a respective said second beam (44), and supporting a respective said second bar (31) on top.

## Patentansprüche

1. Maschine zum Sägen von Tafeln aus Holz, Holzfaserplatten, Kunststoff oder ähnlichem Material, umfassend:
eine erste Arbeitsfläche (3) mit einer Längsachse, der ein Pack (6) aus Tafeln (2) zuzuführen ist;
eine erste Sägestation an einem Ende der genannten ersten Arbeitsfläche (3) mit einer ersten Sägerichtung (X) senkrecht zur genannten Längsachse;
einen ersten Schieber (5) zum Verschieben des Packs (6) von Tafeln (2) in Stufen an jedem Arbeitszyklus entlang der ersten Arbeitsfläche (3) gegen die erste Sägestation (4) um die Packs (11, 71) von Streifen (12, 72) in der ersten Sägerichtung (X) zu zersägen;
eine zweite Arbeitsfläche (7), deren Längsachse mit jener der genannten Arbeitsfläche (3) fluchtet und die einen ersten Bereich (18) nahe bei der ersten Sägestation (4) zur Aufnahme von Packs (11, 71) von derart geschnittenen Streifen (12, 72) aufweist, ferner einen zweiten Bereich (13) nahe bei dem genannten ersten Bereich (18) und der ersten Arbeitsfläche (3) gegenüberliegend;
einen Schlitten (8), der entlang der Längsachse der genannten zweiten Arbeitsfläche (7) sowie aufwärts und abwärts entlang einer Vertikalachse bewegbar ist;
einen ersten und einen zweiten Antrieb (38, 45) zum horizontalen Bewegen bzw. zum Auf- und Abbewegen des Schlittens (8) zur Aufnahme der Packs (11, 71) von Streifen (12, 72) im genannten ersten Bereich sowie zu deren Überführen zum genannten zweiten Bereich (13); eine zweite Sägestation (15) nahe bei dem genannten zweiten Bereich (13), mit einer zweiten Sägerichtung (Y) senkrecht zu der genannten ersten Sägerichtung (X);
eine erste Reihe von Ausrichtelementen (26) zum Ausrichten der Packs (11, 71) von Streifen (12, 72) im genannten zweiten Bereich (13) senkrecht zur genannten zweiten Sägerichtung (Y);
eine zweite Reihe von Ausrichtelementen (26), die entlang der Längsachse der genannten zweiten Arbeitsfläche (7) bewegbar sind, um die genannten Packs (11, 71) von Streifen (12, 72) gegen die genannte erste Reihe von Ausrichtelementen (26) zu verschieben; und
einen zweiten Schieber (16) zum Verschieben der genannten Packs (11, 71) von Streifen (12, 72), die derart ausgerichtet sind, in jedem Arbeitszyklus, vom genannten zweiten Bereich (13) gegen die genannte zweite Sägestation (15), um Stücke aus dem genannten Pack (11, 71) von Streifen (12, 72) in der genannten zweiten Sägerichtung (X) abzuschneiden;
dadurch gekennzeichnet,
daß die genannte zweite Sägestation (15) an einem Ende einer dritten Arbeitsfläche (14) vorgesehen ist, mit einer Längsachse senkrecht zu jener der genannten zweiten Arbeitsfläche (7), um die derart gesägten Stücke aufzunehmen;
daß der erste Schieber (5) und die erste Sägestation (4) gesteuert sind zum Heraussägen aus dem genannten Pack (6) von Tafeln (2) eine Mehrzahl erster Packs (11) von Streifen (12) bestimmter Breite, und wenigstens einen zweiten Pack (71) von Streifen (72) unterschiedlicher Breite;
daß die genannte zweite Arbeitsfläche (7) ferner einen dritten Bereich (21) nahe bei dem genannten zweiten Bereich (13) aufweist sowie den genannten ersten Bereich (18) gegenüberliegend, um vorübergehend die Packs (71) von Streifen (72) unterschiedlicher Breite zu erfassen;
daß der erste und der zweite Antrieb (38, 45) derart gesteuert werden, daß sie den Schlitten (8) dazu veranlassen, zunächst den Pack (71) von Streifen (72) unterschiedlicher Breite vom ersten Bereich (18) zum dritten Bereich (21) zu überführen, um zeitweise festgehalten zu werden, und sodann eine Anzahl zweiter Packs (71) von Streifen (72) unterschiedlicher Breite vom dritten Bereich (21) zum zweiten Bereich (13) zu überführen, um von der zweiten Sägestation (15) zersägt zu werden; und
daß ein elektronisches Steuersystem (17) zum Steuern des Arbeitszyklus der Maschine vorgesehen ist.

2. Maschine nach Anspruch 1, dadurch gekennzeichnet, daß die Ausrichtelemente der beiden Reihen aus Stiften (26) gebildet sind, die axial aufwärts und abwärts zur oberen Fläche der zweiten Bereiche beweglich sind, daß der Schlitten (8) über die Bereiche (18, 13, 21) hinaus nach oben bewegbar ist, daß die erste der genannten Reihen von Stiften (26) zwischen dem ersten Bereich (18) und dem zweiten Bereich (13) angeordnet ist, und daß die zweite Reihe von Stiften (26) normalerweise zwischen dem zweiten Bereich (13) und dem dritten Bereich (21) angeordnet ist.

3. Maschine nach Anspruch 1, dadurch gekennzeichnet, daß die Ausrichtelemente (26) von wenigstens einer Reihe der beiden Reihen vertikal stationär sind, daß der Schlitten (8) oberhalb der Ausrichtelemente (26) bewegbar ist, daß die erste Reihe von Ausrichtelementen (26) zwischen dem ersten Bereich (18) und dem zweiten Bereich (13) angeordnet ist, und daß die zweite Reihe von Ausrichtelementen (26) zwischen dem zweiten Bereich (13) und dem dritten Bereich (21) angeordnet ist.

4. Maschine nach einem der vorausgegangenen Ansprüche, dadurch gekennzeichnet, daß die obere Fläche des zweiten Bereiches (13) auf einem höheren Niveau als die obere Fläche des ersten Bereiches (18), und auf einem niedrigeren Niveau als die obere Fläche des dritten Bereiches (21) liegt, daß der Schlitten (8) auf ein Niveau zwischen der oberen Fläche der beiden zueinander benachbarten Bereiche (18, 13, 21) bewegt wird, um einige der Packs (11, 71) von Streifen (12, 72) in einen unteren der beiden einander benachbarten Bereiche (18, 13) zu bewegen, während einige andere der Packs (11, 71) von Streifen (12, 72) mit dem oberen der beiden einander benachbarten Bereiche (13, 21) in Kontakt gelangen.

5. Maschine nach Anspruch 4, dadurch gekennzeichnet, daß der Schlitten (8) und die erste Sägestation (4) zum Heraussägen der genannten Mehrzahl erster Packs (11) von Streifen (12) sowie einer Gruppe zweiter Packs (71) von Streifen (72) geringerer Breite als einem Pack von Tafeln (2) gesteuert wird, daß der Schlitten (8) weiterhin dahingehend gesteuert wird, daß er vorab die genannte Gruppe derart gesägter zweiter Packs (71) zu einer Zone des genannten ersten Bereiches (18) entfernt von der ersten Sägestation (4) überführt, und gleichzeitig - nach dem Sägen der Mehrzahl von Packs (11) - die genannte Mehrzahl erster Packs (11) zum genannten zweiten Bereich (13), und die genannte Gruppe zweiter Packs (71) zum genannten dritten Bereich (21) überführt.

6. Maschine nach Anspruch 5, dadurch gekennzeichnet, daß der Schlitten (8) dahingehend gesteuert wird, daß er den genannten dritten Bereich (21) einer weiteren Gruppe der genannten zweiten Packs (71) dadurch zum dritten Bereich (21) überführt, daß er die zuvor überführten Gruppen zweiter Packs (71) zurückfährt, um Raum für das Entladen der genannten weiteren Gruppe von Packs (71) zu schaffen, und daß der Schlitten (8) sodann dahingehend gesteuert wird, daß er gleichzeitig eine Anzahl von Gruppen der genannten zweiten Packs (71) vom dritten Bereich (21) zum zweiten Bereich (13) überführt.

7. Maschine nach einem der Ansprüche 4 bis 6, dadurch gekennzeichnet, daß die zweite Arbeitsfläche (7) im wesentlichen kammförmig ist und eine Anzahl erster, im wesentlichen prismatischer Stäbe (22) parallel zur Längsachse der genannten zweiten Arbeitsfläche (7) umfaßt, deren große Flächen aufrechtstehen, daß die Stäbe (22) oben eine erste ebene Fläche aufweisen, die die genannte obere Fläche des ersten Bereiches (18) bilden, eine zweite ebene Fläche, die die genannte obere Fläche des genannten zweiten Bereiches (13) bilden, und eine dritte ebene Fläche, die die genannte obere Fläche des genannten dritten Bereiches (21) bilden.

8. Maschine nach Anspruch 7, dadurch gekennzeichnet, daß der Schlitten (8) kammförmig ist und eine Anzahl zweiter, im wesentlichen prismatischer Stäbe (31) parallel zur Längsachse der genannten zweiten Arbeitsfläche aufweist.

9. Maschine nach Anspruch (8), dadurch gekennzeichnet, daß diese einen Wagen (35) aufweist, umfassend:
zwei parallele Kupplungen (36), die unterhalb sowie parallel zur Längsachse der zweiten Arbeitsfläche (7) angeordnet sind;
einen ersten horizontalen Träger (37) zum Querverbinden der Kupplungen (36);
den ersten Antrieb (38) zum Steuern des Axialhubes der Kupplungen (36) entlang entsprechender Gleitbahnen (51); zwei zweite horizontale Träger (44) parallel zum ersten Träger (37) und höher als dieser, angetrieben von den beiden Kupplungen (36) und derart gestaltet, daß sie vertikal und parallel zueinander wandern;
den genannten zweiten Antrieb (45) zum Steuern des Vertikalhubes der zweiten Träger (44); und
eine Anzahl von zueinander parallelen Abstandsplatten (46), parallel zur zweiten Längsachse der zweiten Arbeitsfläche (7), angeordnet mit ihren Längsachsen und größeren Flächen aufrechtstehend, unten auf einem entsprechenden der genannten zweiten Träger (44) gelagert, und eine entsprechende der genannten zweiten Stäbe (31) oben tragend.

## Revendications

1. Une machine pour découper des panneaux de bois, de fibre de bois, de matière plastique ou d'un matériau analogue comprenant :
une première surface de travail (3) ayant un axe longitudinal et agencée pour être alimentée avec un paquet (6) de panneaux (2) ; un premier post de coupe à une extrémité de ladite première surface de travail (3) ayant une première direction de coupe (X) perpendiculaire audit axe longitudinal ;
un premier dispositif de poussée (5) pour pousser par étapes ledit paquet (6) de panneaux (2) à chaque cycle de fonctionnement le long de ladite première surface de travail (3) vers ledit premier poste de coupe (4) pour découper des paquets (11, 71) de bandes (12,72) dans ladite première direction de coupe (X) ;
une deuxième surface de travail (7) ayant une axe longitudinal aligné avec celui de ladite surface de travail (3), ladite deuxième surface de travail (7) comprenant une première partie (18) près dudit premier poste de coupe (4) pour recevoir lesdits paquets (11, 71) de bandes (12, 72) ainsi découpés et une deuxième partie (13) contiguë à ladite première partie (18) et opposée à ladite première surface de travail (3) ;
un coulisseau (8) mobile horizontalement le long de l'axe longitudinal de ladite deuxième surface de travail (7) et également mobile vers le haut et vers le bas le long d'un axe vertical ;
un premier et un second moyens d'entraînement (38 et 45) pour déplacer horizontalement et respectivement pour déplacer vers le haut et vers le bas ledit coulisseau (8) afin de prélever lesdits paquets (11, 71) de bandes (12, 72) dans ladite première partie (18) et pour les transférer vers ladite deuxième partie (13) ;
un deuxième poste de coupe (15) situé près de ladite deuxième partie (13) ayant une deuxième directin de coupe (Y) perpendiculaire à ladite première direction de coupe (X) ; une première rangée d'éléments d'alignement (26) pour aligner lesdits paquets (11, 71) de bandes (12, 72) sur ladite deuxième partie (13) perpendiculairement à ladite deuxième direction de coupe (Y) ;
une deuxième rangée d'éléments d'alignement (26) susceptible d'être déplacée le long de l'axe longitudinal de ladite deuxième surface de travail (7) pour pousser lesdits paquets (11, 71) de bandes (12, 72) vers ladite première rangée d'éléments d'alignement (26) et
un deuxième dispositif de poussée (16) pour pousser lesdits paquets (11, 71) des bandes (12, 72) ainsi alignés à chaque cycle de fonctionnement à partir de ladite deuxième partie (13) vers ledit deuxième poste de coupe (15) pour découper des morceaux dudit paquet (11, 71) de bandes (12, 72) sur ladite deuxième direction de coupe (X) ;
caractérisée par le fait que ledit deuxième poste de coupe (15) est prévu à une extrémité de la troisième surface de travail (14) ayant son axe longitudinal perpendiculaire à celui de ladite deuxième surface de travail (7) pour recevoir lesdits morceaux ainsi découpés ;
que ledit premier dispositif de poussée (5) et ledit premier poste de coupe (4) sont commandés pour découper à partire dudit paquet (6) des panneaux (2) une pluralité de premiers paquets (11) de bandes (12) ayant une largeur prédéterminée et au moins un deuxième paquet (71) de bandes (72) ayant une largeur différente ;
que ladite deuxième surface de travail (7) comprend également une troisième partie (21) près de ladite deuxième partie (13) et opposée a ladite première partie (18) pour maintenir temporairement ledit paquet de largeur différente (71) de bandes (72) ;
que lesdits premier et deuxième dispositifs d'entraînement (38, 45) sont commandés afin d'amener ledit coulisseau (8) à transférer tout d'abord ledit paquet de largeur différente (71) de bandes (72) depuis ladite première partie (18) vers ladite troisième partie (21) devant être maintenu temporairement et transférer ensuite un nombre desdits seconds paquets (71) de bandes (72) ayant une largeur différente à partir de ladite troisième partie (21) vers ladite deuxième partie (13) pour la découpe par ledit deuxième poste de coupe (15) ; et
qu'un système de commande électronique (17) est prévu pour commander le cycle fonctionnement de la machine.

2. Une machine selon la revendication 1, caractérisée en ce que le éléments d'alignement desdites deux rangées sont constitués de tiges (26) mobiles axialement vers le haut et vers le bas vers la surface supérieure desdites deuxièmes parties, ledit coulisseau (8) étant mobile vers le haut au dessus desdites parties (18, 13, 21), ladite première de ladite rangée de tiges (26) étant située entre ladite première partie (18) et ladite deuxième partie (13), ladite deuxième rangée de tiges (26) étant normalement située entre ladite deuxième partie (13) et ladite troisième partie (21).

3. Une machine selon la revendication 1, caractérisée en ce que les éléments d'alignement (26) d'au moins un rangée desdites deux rangées sont fixes verticalement, ledit coulisseau (8) étant mobile vers le haut au dessus desdits éléments d'alignement (26), ladite première rangée d'éléments d'alignement (26) étant disposée entre ladite première partie (18) et ladite deuxième partie (13), ladite deuxième rangée d'éléments d'alignement (26) étant située entre ladite deuxième partie (13) et ladite troisième partie (21).

4. Une machine selon l'une quelconque des revendications précédentes, caractérisée en ce que la surface supérieure de ladite deuxième partie (13) est à une niveau plus élevé que la surface supérieure de ladite première partie (18) et à un niveau plus bas que la surface supérieure de ladite troisième partie (21), ledit coulisseau (8) étant déplacé à un niveau intermédiaire entre la surface supérieure de deux desdites parties mutuellement contiguës (18, 13, 21) pour déplacer certains desdits paquets (11, 71) de bandes (12, 72) dans une partie inférieure desdites deux parties contiguës (18, 13) tandis que certains autres desdits paquets (11, 71) de bandes (12, 72) viennent au contact de la partie supérieure desdites deux parties adjacentes (13, 21)

5. Une machine selon la revendication 4, caractérisée en ce que ledit coulisseau (8) et ledit premier poste de coupe (4) sont commandés pour découper à partir d'un paquet de panneaux (2) ladite pluralité de premiers paquets (11) de bandes (12) et un groupe de seconds paquets (71) de bandes (72) ayant une plus faible largeur, ledit coulisseau (8) étant en outre commandé pour transférer de façon préliminaire ledit groupe de seconds paquets (71) ainsi découpé vers une zone de ladite première partie (18) éloignée dudit premier poste de coupe (4) et lorsque ladite pluralité de paquets (11) a été découpée, pour transférer simultanément ladite pluralité de premiers paquets (11) vers ladite deuxième partie (13) et ledit groupe de deuxièmes paquets (71) vers ladite troisième partie (21).

6. Une machine selon la revendication 5, caractérisée en ce que ledit coulisseau (8) est commandé pour transférer vers ladite troisième partie (21) un autre groupe desdits deuxièmes paquets (71) vers ladite troisième partie (21) en remenant les groupes préalablement transférés desdits deuxièmes paquets (71) pour faire la place pour le déchargement dudit autre groupe de paquets (71), ledit coulisseau (8) étant ensuite commandé pour transférer simultanément un nombre de groupes desdits seconds paquets (71) à partir de ladite troisième partie (21) vers ladite deuxième partie (13).

7. Une machine selon l'une quelconque des revendications 4 à 6, caractérisée en ce que ladite deuxième surface de travail (7) est essentiellement en forme de peigne et comprend un certain nombre de premières barres essentiellement prismatiques (22) parallèles a l'axe longitudinal de ladite deuxième surface de travail (7) et agencées avec leurs plus grandes faces verticales ; lesdites barres (22) définissant sur le dessus une première surface plane formant ladite surface supérieure de ladite première partie (18), une deuxième surface place formant ladite surface supérieure de ladite deuxième partie (13) et une troisième surface plane formant ladite surface supérieure de ladite troisième partie (21).

8. Une machine selon la revendication 7, caractérisée en ce que ledit coulisseau (8) est en forme de peigne et comprend un certain nombre de secondes barres essentiellement prismatiques (31) parallèles à l'axe longitudinal de ladite deuxième surface de travail.

9. Une machine selon la revendication 8, caractérisée en ce qu'elle comprend un chariot (35) ayant deux accouplement parallèles (36) situés en dessous et parallèles à l'axe longitudinal de ladite deuxième surface de travail (7) ;
des premières poutres horizontales (37) pour relier transversalement lesdits accouplements (36) ;
ledit premier moyen d'entraînement (38) pour commander le déplacement axial desdits accouplements (36) le long de glissières respectives (51) ; deux deuxièmes poutres horizontales (44) parallèles à et plus élevées que lesdites premières poutres (37) entraînées par lesdits accouplements (36) et conçues pour sa déplacer verticalement parallèlement l'une à l'autre ;
ledit deuxième moyen d'entraînement (45) pour contrôler le déplacement vertical desdites deuxièmes poutres (44) ; et
un certain nombre de plaques d'espacement parallèles (46) parallèles à la deuxième partie longitudinale de ladite deuxième surface de travail (7) ; agencées avec leurs axes longitudinaux et les plus grandes faces verticales, supportées sur le fond sur une partie respective de ladite deuxième poutre (44) et supportant une partie respective de ladite deuxième barre (31) sur le dessus.
